# EUROPEAN PATENT APPLICATION

(11) **EP 3 016 366 A1**
(43) Date of publication of application: **04.05.2016**
(21) Application number: 15189980.4
(22) Date of filing: 15.10.2015
(51) Int. Cl.: H04N 1/00, H04N 1/04

(54) **DESKTOP INFORMATION PROCESSING APPARATUS AND PRINTING METHOD THEREOF**

(30) Priority: 27.10.2014 US 201414524130
(71) Applicant: Toshiba TEC Kabushiki Kaisha, Tokyo 141-0032 (JP)
(72) Inventor: SASAHARA, Katsuya, Shinagawa-ku, Tokyo 141-0032 (JP)
(74) Representative: Takeuchi, Maya

(57) **Abstract**

In accordance with one embodiment, a desktop information processing apparatus comprises a touch panel display, an insertion section, a scanning section, an image processing section, a discharging section and a control section. The display surface of the touch panel display is on the upper surface of the top plate of the desktop information processing. An original sheet is inserted into the insertion section. The scanning section reads the surface of the sheet inserted into the insertion section. The image processing section carries out an image processing for the sheet. The discharging section discharges the sheet processed by the image processing section. The control section controls the operation or display on the touch panel display and controls the operations of the image processing section based on the operation.

## Description

### FIELD

Embodiments described herein relate to an information processing apparatus provided with a touch panel display.

### BACKGROUND

In recent years, a touch panel display has been used in a portable terminal apparatus or notebook computer as a user interface.

In the conventional technologies, although a functionally excellent device such as touch panel display is used, regarding operability and data display, the outstanding user interface is not made the best use of.

### BRIEF DESCRIPTION OF THE DRAWINGS

Fig. 1 is a diagram illustrating the appearance of a desktop information processing apparatus according to an embodiment;
Fig. 2 is a schematic sectional view exemplifying the configuration of a desktop information processing apparatus according to an embodiment;
Fig. 3 is a block diagram exemplifying the configuration of a control section;
Fig. 4 is a block diagram exemplifying the configuration of an image processing section;
Fig. 5 is a diagram illustrating a state in which an original sheet is scanned;
Fig. 6 is a diagram illustrating a state in which scanned image data is formed on a sheet;
Fig. 7 is a diagram showing an example of the display of the desktop information processing apparatus and operation directions of a displayed image with arrows;
Fig. 8 is a diagram exemplifying an operation of constructing a combination of an input source and an output destination and the display of the operation;
Fig. 9 is a diagram exemplifying the implementation of a processing based on the combination constructed in the example shown in Fig. 8;
Fig. 10 is a diagram exemplifying an operation of rotating an image;
Fig. 11 is a diagram exemplifying the operations of a desktop information processing apparatus according to an embodiment;
Fig. 12 is a diagram exemplifying the operations of a desktop information processing apparatus according to an embodiment; and
Fig. 13 is a diagram exemplifying the operations of a desktop information processing apparatus according to an embodiment.

### DETAILED DESCRIPTION

In accordance with one embodiment, a desktop information processing apparatus comprises a touch panel display, an insertion section, a scanning section, an image processing section, a discharging section and a control section. The display surface of the touch panel display is on the upper surface of the top plate of the desktop information processing. An original sheet is inserted into the insertion section. The scanning section reads the surface of the sheet inserted from the insertion section. The image processing section carries out an image processing for the sheet. The discharging section discharges the sheet processed by the image processing section. The control section controls the operation or display on the touch panel display and controls the operations of the image processing section based on the operation.

A desktop information processing apparatus having a touch panel display on the flat top plate surface thereof is described in this embodiment.

Preferably, the image processing section is configured to form the image obtained by the scanning section from one side of the sheet on another sheet.

Preferably, the image processing section is configured to delete the image formed on one side of the sheet inserted from the insertion section.

Preferably, the insertion section is arranged in such a manner that the longitudinal direction thereof is parallel to a first end part of the touch panel display and is opened on the upper surface of the top plate and the touch panel display is configured to output the image read by the scanning section from the first end part and to display the image with the image advancing towards the center of the touch panel display, wherein the advancement speed of the image is the same as that of the original sheet inserted into the insertion section.

Preferably, the discharging section is arranged in such a manner that the longitudinal direction thereof is parallel to a second end part of the touch panel display and is opened on the upper surface of the top plate. The touch panel display may be configured to display the displayed image with the displayed image advancing and feeding from the center of the touch panel display to the second end part, wherein the feed speed is the same as the discharging speed of the sheet discharged from the discharging section.

Preferably, the touch panel display is configured to display the image of the original sheet read by the scanning section in such a manner that the image can be moved according to an operation on the touch panel.

If the image displayed on the touch panel display is moved to be overlapped with a predefined area displayed on the touch panel display, the image processing section may be configured to delete the image formed on the surface of the original sheet.

Preferably, the touch panel display is configured to display a mark representing a data input/output function thereon and displays the image in such a manner that the image can be moved according to an operation on the touch panel display. The control section may be configured to carry out a control to output the image using a function corresponding to the mark when the image is overlapped with the mark.

The touch panel display may be configured to display a plurality of marks representing different functions.

When detecting an operation of associating a first mark serving as one mark of the plurality of marks with a second mark serving as another mark, the control section is configured to carry out a control to output the data input using the function corresponding to the first mark using a function corresponding to the second mark.

Preferably, the touch panel display is configured to display a setting screen for the setting of a function corresponding to the mark after a touch on the mark is detected and the touch on the same mark is released.

The present invention also relates to a display method of a desktop information processing apparatus comprising a sheet insertion section, a scanning section, an image processing section, a sheet discharging section and a touch panel display, wherein the insertion section, the discharging section and the display surface of the touch panel display are located on the upper surface of the top plate of the desktop information processing apparatus, and the method comprising: reading the surface of a sheet inserted into the insertion section using the scanning section; displaying the read image on the touch panel display with the read image outputting from the end part of the touch panel display closest to the insertion section and moving the read image to the center of the touch panel display at a speed the same as the advancement speed of the original sheet inserted into the insertion section; and displaying the image on the touch panel display with the image advancing and feeding from the center of the touch panel display into the end part of the touch panel display closest to the discharging section at a feed speed the same as the discharging speed of the sheet discharged from the discharging section.

Preferably, the display method further comprises: forming the image obtained by the scanning section from one side of the sheet on another sheet.

Preferably, the display method further comprises: deleting the image formed on one side of the sheet inserted from the insertion section.

Preferably, the display method further comprises: displaying the image of the original sheet read by the scanning section in such a manner that the image can be moved according to an operation on the touch panel; and deleting the image formed on the surface of the original sheet if the image displayed on the touch panel display is moved to be overlapped with a predefined area displayed on the touch panel display.

Preferably, the display method further comprises: displaying a mark representing a data input/output function thereon and displays the image in such a manner that the image can be moved according to an operation on the touch panel display; and carrying out a control to output the image using a function corresponding to the mark when the image is overlapped with the mark.

Preferably, the display method further comprises: displaying a plurality of marks representing different functions; and carrying out a control to output the data input using the function corresponding to the first mark using a function corresponding to the second mark when detecting an operation of associating a first mark serving as one mark of the plurality of marks with a second mark serving as another mark.

Preferably, the method further comprises displaying a setting screen for the setting of a function corresponding to the mark after a touch on the mark is detected and the touch on the same mark is released.

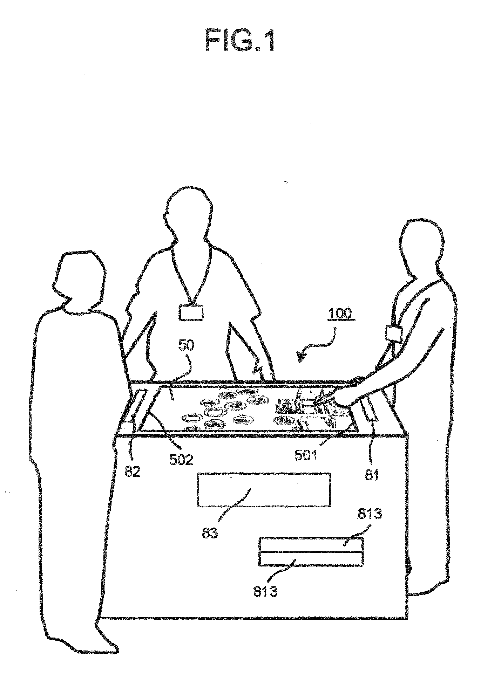

The present embodiment, given as non-limiting examples, is described below with reference to the accompanying drawings. Fig. 1 shows the appearance of a desktop information processing apparatus 100 according to an embodiment. As shown in Fig. 1, the desktop information processing apparatus 100 is a table (desktop)-type information processing apparatus having a big touch panel display 50 for displaying operations on the flat top plate surface thereof. The touch panel display 50 can be used by a plurality of users at the same time.

The desktop information processing apparatus 100 comprises an insertion section 81 for the insertion of an original sheet to be copied and a discharging section 82 for outputting the sheet after the sheet is processed. The insertion section 81 is arranged in such a manner that the longitudinal direction thereof is parallel to an end part 501 (first end part) of the touch panel display 50 and is opened on the upper surface of the top plate of the information processing apparatus. Further, the discharging section 82 is arranged in such a manner that the longitudinal direction thereof is parallel to an end part 502 (second end part) of the touch panel display 50 and is opened on the upper surface of the top plate of the information processing apparatus.

The desktop information processing apparatus 100 further comprises a collection stacker 83 for accommodating the original sheet inserted from the insertion section 81. The collection stacker 83 can be drawn out from the nearer side of Fig. 1 for the user to collect the original sheet. Further, the desktop information processing apparatus 100 has a feed section 813 for accommodating a new sheet. The feed section 813 can be drawn out from the nearer side of Fig. 1 for the user to place a new sheet therein.

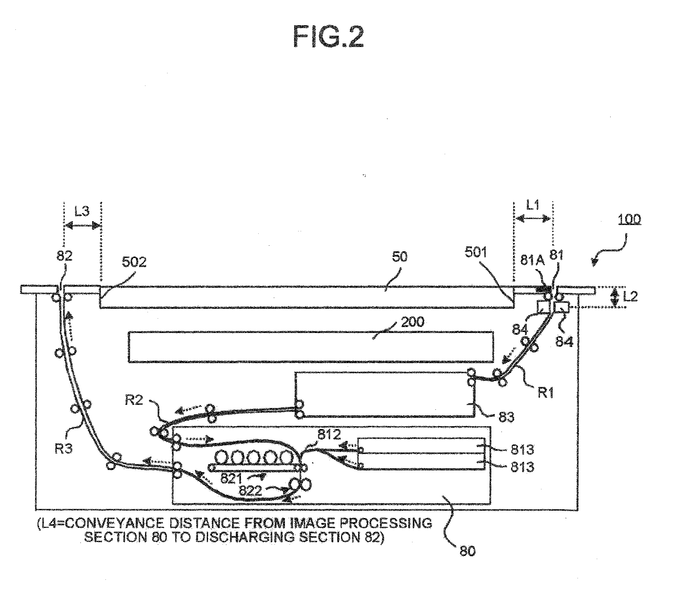

Fig. 2 is a schematic sectional view exemplifying the internal configuration of the desktop information processing apparatus 100 and a diagram illustrating the conveyance direction of a sheet indicated by a dotted arrow. The desktop information processing apparatus 100 further comprises a scanning section 84, an image processing section 80, a control section 200 and conveyance paths R1-R3.

The scanning section 84 directly under the insertion section 81 is a line sensor for reading an original sheet. In the example shown in Fig. 2, there are two scanning sections 84 which are located on two sides of the conveyance path R1 across the conveyance path R1 so that the scanning sections 84 can photograph two sides of an original sheet. Besides, there may be only one scanning section 84 which is arranged on one side of the conveyance path to photograph one side of an original sheet.

The conveyance path R1 via which the original sheet read by the scanning section 84 is conveyed to the collection stacker 83 is driven when the original sheet is detected by a detection sensor 81A of the insertion section 81 so as to pull the original sheet into the desktop information processing apparatus 100.

The image processing section 80 comprises a conveyance section 812, an image forming section 821, a heater 822 and the aforementioned feed section 813. In an image forming processing, the image processing section 80 forms the image read by the scanning section 84 on the sheet in the feed section 813 and discharges the sheet on which the image is formed to the conveyance path R3. The conveyance path R3 via which the sheet on which the image is formed is conveyed to the discharging section 82.

The image processing section 80 is further capable of carrying out a color erasing processing for the image formed on the sheet. In a color erasing processing, the image processing section 80 acquires the original sheet accommodated in the collection stacker 83 via the conveyance path R2 and carries out a color erasing processing for the original sheet on which an image is formed with a color erasable toner which can be decolorized when heated to above a certain temperature. The image processing section 80 discharges the sheet subjected to the color erasing processing to the conveyance path R3 via which the sheet subjected to the color erasing processing is conveyed to the discharging section 82. The other internal configuration and the operations of the image processing section 80 except the aforementioned descriptions are described later.

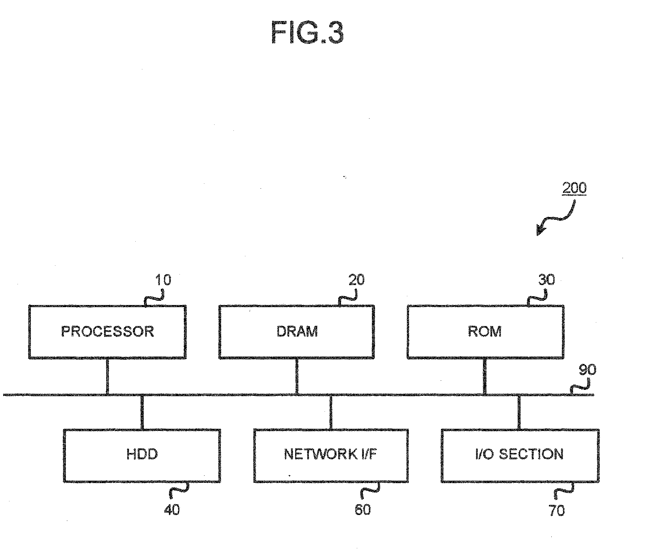

The control section 200 is a computer unit for totally controlling the internal hardware of the desktop information processing apparatus 100. The internal configuration of the control section 200 is described with reference to Fig. 3. Additionally, it is set that the distance from the insertion section 81 to the end part 501 is L1, the conveyance distance from the opening position (the detection position of the detection sensor 81A in the vertical direction) of the insertion section 81 to the reading position of the scanning section 84 is L2, the distance from the end part 502 to the opening position of the discharging section 82 is L3, and the conveyance distance from the discharging opening of the image processing section 80 to the opening position of the discharging section 82 is L4. In this example, L1 is greater than L2 (L1>L2), and L4 is greater than L3 (L4>L3).

Fig. 3 is a block diagram exemplifying the configuration of the control section 200. The control section 200 structurally identical to existing computers comprises a processor 10, a DRAM (Dynamic Random Access Memory) 20, a ROM (Read Only Memory), a HDD (Hard disk drive) 40, a network I/F (Interface) 60 and an I/O (Input/Output) section 70, which are connected with each other via a bus line 90 to send or receive data and input or output an indication message or signal.

In the embodiment, the processor 10 is a CPU (Central Processing Unit) which develops the programs pre-stored in the HDD 40 or the ROM 30 in the DRAM 20 and executes operations according to the programs to totally control each device. The DRAM 20 is a main volatile memory device, and the ROM 30 stores system programs and the like in a nonvolatile manner. The HDD 40 stores data of the user who uses the desktop information processing apparatus 100, the programs used by the user and the image data read by the scanning section 84.

The network I/F 60 is a device for the data transmission/reception with a device outside the desktop information processing apparatus 100. In this case, the communication unit may realize a wired or wireless communication. Further, the network I/F 60 is a structure including a FAX modem. The I/O section 70 outputs an indication signal or message from the processor 10 to the scanning section 84, the image processing section 80, the touch panel display 50 and the conveyance paths R1, R2 and R3, inputs a message or signal indicating a processing result from each unit and inputs the data acquired from each unit.

Besides, the touch panel display 50 is connected with the control section 200 so that the display screen and the operation of the touch panel display 50 are controlled by the control section 200.

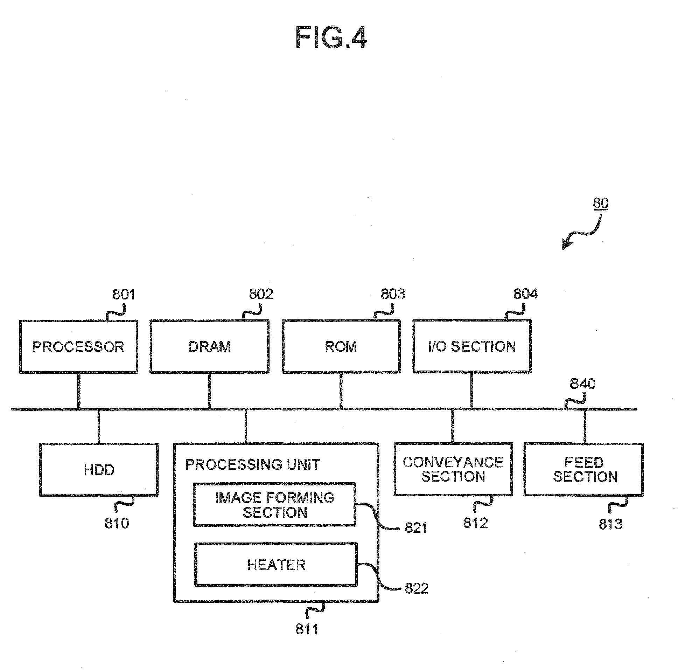

Fig. 4 is a block diagram exemplifying the internal configuration of the image processing section 80. The image processing section 80 comprises a processor 801, a DRAM 802, a ROM 803, an I/O section 804, a HDD 810, a processing unit 811, a conveyance section 812 and a feed section 813. The processor 801, the DRAM 802, the ROM 803 and the HDD 810 act as the control section 200 and provide the same functions. The I/O section 804 is connected with the control section 200 to receive an indication message and a signal from the control section 200 and sends the processing result, data and the like of the image processing section 80 to the control section 200. The feed section 813 feeds sheets, one by one, to the main body of the image processing section 80. The feed section 813 which is a cassette for storing overlapped sheets in this embodiment may also be a tray. The conveyance section 812 conveys the sheet from the feed section 813 and the original sheet from the conveyance path R2 to the processing unit 811 and conveys the sheet processed in the processing unit 811 to a connection opening connected with the conveyance path R3.

The processing unit 811 which forms an image on the conveyed sheet or erases the image formed on the conveyed original sheet comprises the aforementioned image forming section 812 and heater 822. The image forming section 821 transfers a toner image scanned by the scanning section 84 onto a sheet fed from the feed section 813. In addition to the conventional ordinary cyan (C), magenta (M), yellow (Y) and black (K) toners, the transferred toner may also be a color erasable toner the color of which is erased when heated to a certain temperature higher than a heat fixing temperature. In addition, the user can selectively print with an ordinary toner or a color erasable toner.

The heater 822 heats the sheet and fixes the transferred toner image on the sheet. Further, the heater 822 has a function of erasing the image formed on the surface of an original sheet. The heater 822 heats the original sheet obtained from the conveyance path R2 at a temperature higher than the heat fixing temperature to erase the image on the original sheet. Besides, in such a color erasing processing, as there is no need to form an image on a sheet, the image forming section 821 carries out no action and only the heater 822 carries out a heating processing.

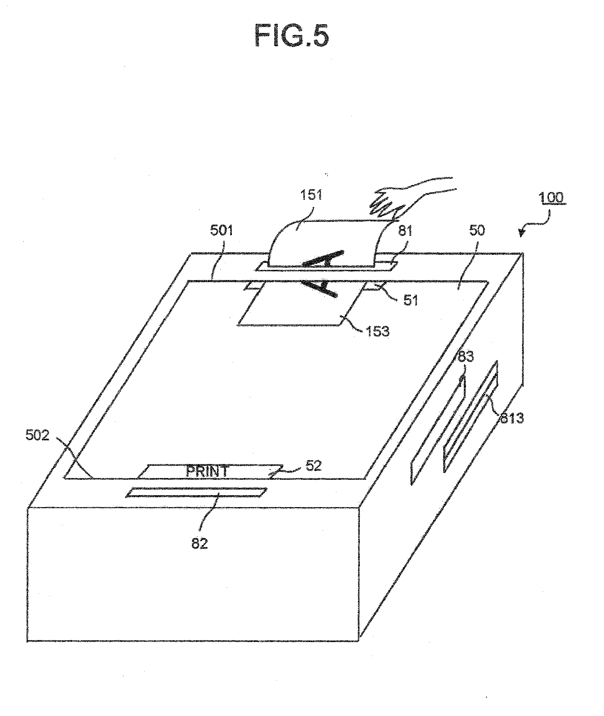

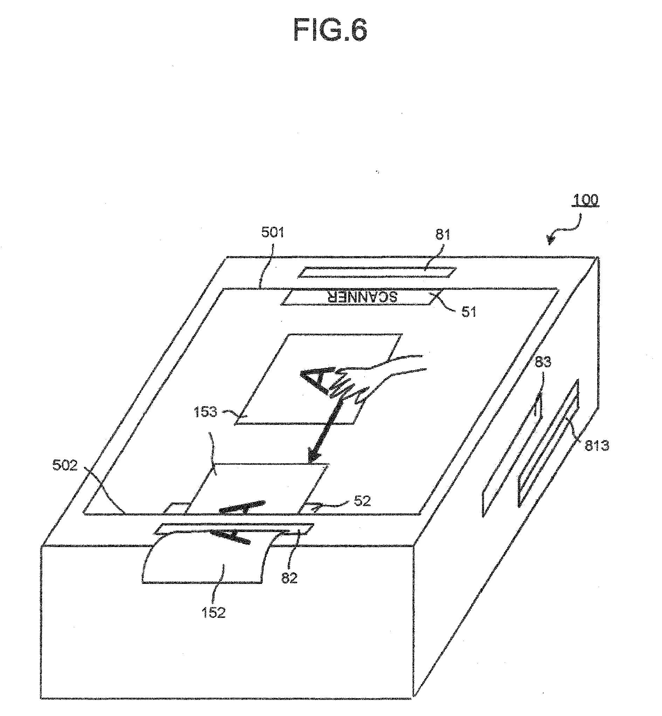

The copying processing of the desktop information processing apparatus 100 is described with reference to Fig. 5 and Fig. 6. First, Fig. 5 shows a state in which an original sheet 151 is inserted into the insertion section 81. When the front end of the original sheet 151 is inserted into the insertion section 81, the detection sensor 81A detects the sheet, and the conveyance path R1 is driven to guide the sheet to the scanning section 84. The original sheet 151 advances while being read by the scanning section 84, and the touch panel display 50 displays the advancing scanned image 153 from the end part 501 of the touch panel display 50 at a speed the same as the advancement speed of the sheet 151. There is an area 51 (no label name is displayed in Fig. 5) affixed with a 'Scanner' label (mark) on the end part 501 nearby the insertion section 81. The scanned image 153 is output from the area 51 and slides to the center of the screen. Additionally, at this time, the touch panel display 50 displays the scanned image in the same reduction scale of the original sheet 151 and moves the scanned image. Besides, the scanned image 153 is set to be only stored in the DRAM 20 of the control section 200 temporarily, it may also be set to be stored in the HDD 40 permanently.

The size of the original sheet is calculated according to the detection of the sensor of the scanning section 84, preset information, the resolution of the screen and reduction scale information. The movement speed is calculated based on the speed information sent from the control unit (the control section 20 in this example) controlling the conveyance path R1 and preset information.

The scanning section 84 reads the original sheet 151 from the front end part to the rear end part thereof, and as shown in Fig. 6, the scanned image moves to the center of the touch panel display 50 when the scanning is finished. The user moves, through a flick operation, the scanned image 153 to the area 52 affixed with a 'Print' label arranged on the end part 502 of the screen; by partially overlapping the scanned image with the area 52, a printing mode is activated and the image processing section 80 is driven. Sequentially, the control section 200 sends the data of the scanned image 153 stored in the DRAM 20 to the image processing section 80, and the image processing section 80 starts to carry out a printing operation. The sheet 152 on which an image is formed is discharged from the discharging section 82. The scanned image 153 displayed on the touch panel display 50 is acquired and fed into the end part 502 closest to the discharging section 82 while the sheet 152 is discharged. By unifying the discharging speed of the sheet 152 from the discharging section 82 and the feed speed of the scanned image 153, it seems that the image displayed on the touch panel display 50 was directly formed on the sheet. The advancement speed of the scanned image 153 is synchronized with the discharging speed of the discharging section 82 according to preset information, a preset discharging timing and preset speed information and the like.

Structured like this, the conveyance of a sheet and the display of an image on the touch panel display 50 can be synchronized so that the image displayed on the touch panel display 50 is moving like the real sheet.

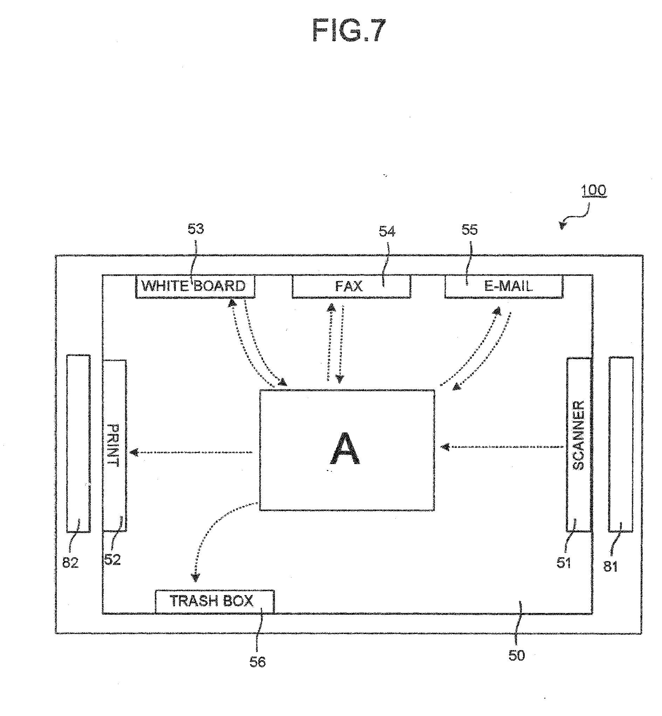

The aforementioned example is limited to an example of a copying processing; however, the desktop information processing apparatus 100 may realize other input and output functions in the same way. The realization of other input and output functions by the desktop information processing apparatus 100 is described with reference to Fig. 7. The areas 53-56 shown in Fig. 7 affixed with labels (marks) representing function names (White board, Fax, Email and Trash box) excluding the aforementioned scanning function and printing function are located on end parts of the touch panel display 50. As shown in Fig. 7, the areas 51-56 may be affixed with labels which may be text labels or other marks such as image as long as the functions represented by the marks can be recognized, no limitation is given to its form. Further, in Fig. 7, operation directions and display directions are represented by dotted arrows.

The displayed image is moved to the area 53 affixed with a 'White board' label through a flick operation, thereby sending the displayed image to an electronic white board serving as an external device. The image is displayed on the electronic white board. At this time, under the instruction of the control section 200, the touch panel display 50 displays the displayed image with the displayed image acquiring and feeding line by line to a display end part (an end part of the screen in the area 53). Further, when the desktop information processing apparatus 100 receives the image data manually written on the electronic white board, the touch panel display 50 displays the image by outputting the image from the area 53. In this case, the touch panel display 50 displays the image by advancing, line by line, the image from the area 53 to the center of the screen.

When the desktop information processing apparatus 100 receives Fax data, the touch panel display 50 displays the received image by advancing, line by line, the received image from the area 54 affixed with a 'Fax' label. Further, when the desktop information processing apparatus 100 sends a Fax, the user moves the displayed image to the area 54. Through this operation, the touch panel display 50 displays a dialog for the input of sending destination information (e.g. a Fax number). When the 'send' button in the dialog is pressed, the desktop information processing apparatus 100 faxes and sends the displayed image. In this case, under the instruction of the control section 200, the touch panel display 50 displays the image with the displayed image advancing and feeding, line by line to a display end part (a certain screen end part of the area 54).

To attach a file in an Email, the user moves the displayed image to the area 55 affixed with an 'Email' label. Then, the touch panel display 50 displays a screen for the input of a title, a sending destination and an email body. When the user presses the 'send' button, the desktop information processing apparatus 100 attaches the displayed image and sends a mail. When sending the email, the touch panel display 50 may display the displayed image by acquiring the displayed image (may be text information such as the title, the sending destination or the email body), line by line on a screen end part nearby the area 55. When the desktop information processing apparatus 100 receives a mail, the touch panel display 50 displays the mail by advancing the file image (may be text information such as a title, a sending destination or a mail body) attached in the mail, line by line from the area 55.

To delete the image displayed, the user moves the image to the area 56 affixed with a 'Trash box' label 56 so that the desktop information processing apparatus 100 deletes data of the displayed image. The deletion may be the logical deletion or the physical deletion of the data. Further, the touch panel display 50 displays the image by acquiring the image line by line into an end part.

Further, if the displayed image is an image obtained by scanning the original sheet inserted into the insertion section 81 with the scanning section 84, through the deletion operation, the desktop information processing apparatus 100 carries out a color erasing processing for the original sheet accommodated in the collection stacker 83. In this case, the color-erased sheet is output from the discharging section 82. The desktop information processing apparatus 100 carries out the color erasing processing while synchronizing the discharging speed of the sheet with the feed speed of the displayed image into an end part.

The aforementioned input/output functions may be combined. For example, by moving an image output from the area 51 affixed with a 'Scanner' label to the area 54 affixed with a 'Fax' label, an original sheet can be faxed. By moving the fax image output from the area 54 affixed with a 'Fax' label to the area 55 affixed with an 'Email' label, the received fax data can be directly processed as an image attached in an Email. To print and output an image received from an email or a Fax, the image is moved to the area 52 affixed with a 'print' label. In this case, the display of the image is synchronized with the output of the sheet, as shown in Fig. 6. Certainly, other combinations may be realized except the aforementioned one.

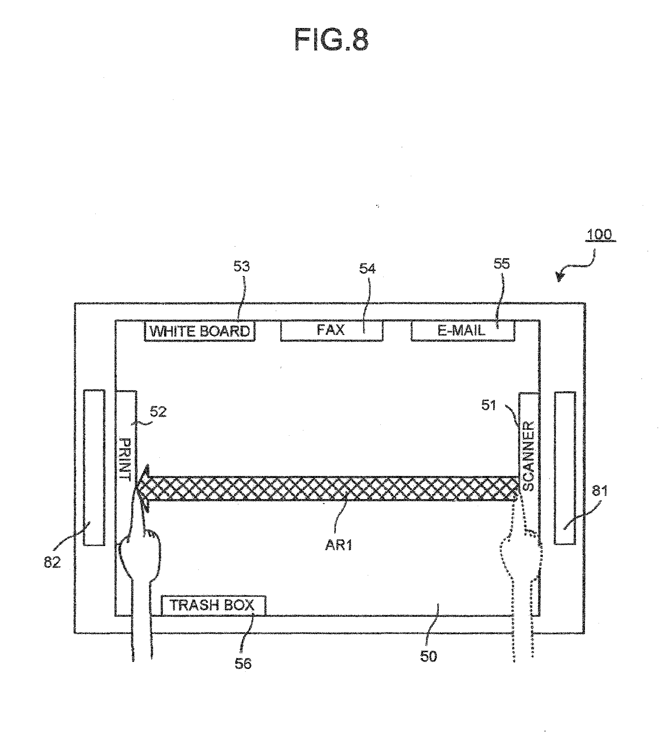

The user may define the aforementioned combination of input and output functions in advance, the definition will be described with reference to Fig. 8. Fig. 8 exemplifies an operation of combining a scanning processing with a printing processing and the display of the operation. The user sets a combination by sequentially touching the area 51 and the area 52 on the touch panel display 50 or touching the area 51 and then directly moving the area 51 to the area 52 with fingertip. The touch panel display 50 represents a combination of an input source and an output destination by displaying an arrow AR1.

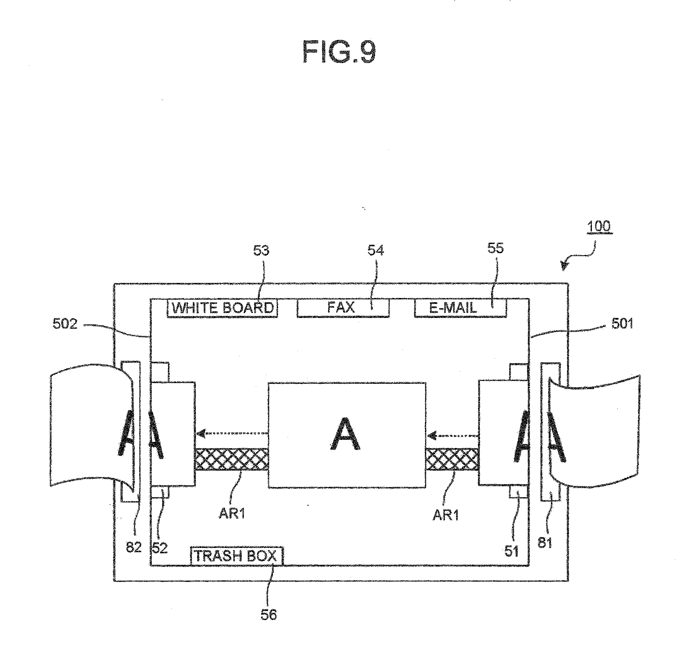

By defining a combination in advance in this way, in the example shown in Fig. 8, the desktop information processing apparatus 100 automatically achieves the processing starting from the insertion of an original sheet into the insertion section 81 to the output of a printed sheet from the discharging section 82 (that is, a copying processing), requiring no manual operation of the user. The display transition in this case is shown in Fig. 9. The dotted arrow shown in Fig. 9 represents the advancement direction of the display. The scanned image read by the scanning section 84 is displayed from the end part 501 of the touch panel display 50 at a speed matching with the advancement speed of the sheet in the insertion section 81, as stated above. When the scanning is completed, the scanned image is directly moved to the other end part 502 of the touch panel display 50 from the center of the touch panel display 50. Then, the scanned image is fed into the end part 502 at a speed the same as the output speed of the sheet in the discharging section 82. As the output of the sheet from the discharging section 82 and the feed of the scanned image into the end part 502 need to be started at the same timing, the speed at which the scanned image is moved from the end part 501 of the touch panel display 50 to the end part 502 depends on the processing speed of the image processing section 80 and the sheet conveyance speed of the conveyance path R3.

Besides, the display arrow AR1 shown in Fig. 8 and Fig. 9 is a straight arrow, however, the display arrow may also be a curve arrow, depending on the track of the fingertip of the user. In this case, the scanned image advancing to the end part 502 from the end part 501 of the touch panel display 50 moves in accordance with the curve arrow.

The desktop information processing apparatus 100 stores the combination of the functions of an input source and an output destination in the HDD 40 of the control section 200. In this example, it is set that the identification number of an input source is stored in the HDD 40 at least corresponding to the identification number of an output destination. Further, in the case where an image is moved according to the track of a fingertip, track information (a plurality of X-Y coordinate values) is also registered correspondingly. Further, if the user carries out a specific operation (e.g. double tap) on the arrow AR1 shown in Fig. 8 or Fig. 9, the control section 200 may further delete a corresponding combination from the HDD 40. In this case, similarly, the control section 200 also correspondingly stores the position information of an arrow representing track information and the like in the HDD 40.

The aforementioned example is an embodiment of a copying processing which is achieved by combining a scanning processing with a printing processing and requires no manual operation, apparently, there may be other combinations. For example, by combining the area 51 affixed with a 'Scanner' label which is set as an input source with the area 56 affixed with a 'Trash box' label which is set as an output destination, a color erasing processing can be directly carried out for an original sheet inserted into the insertion section 81.

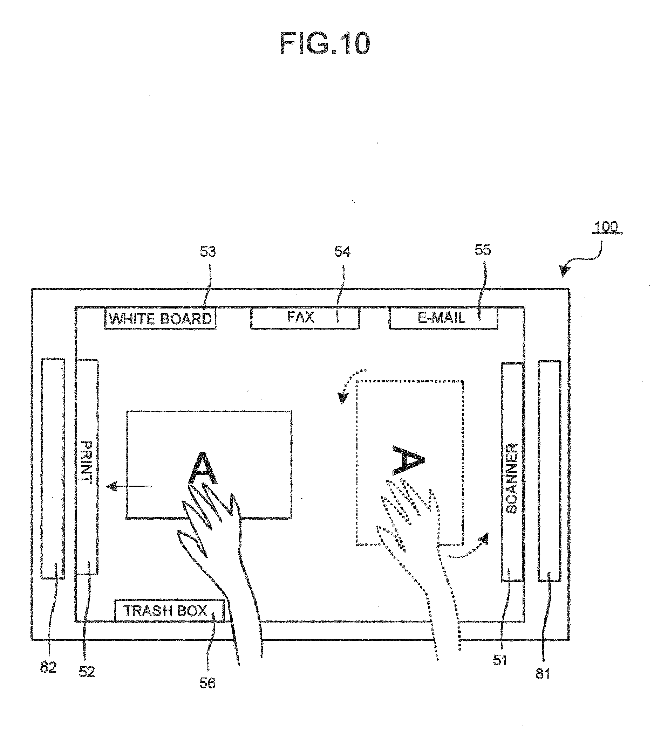

Further, the image displayed on the touch panel display 50 may be rotated according to an operation of the user. For example, the displayed image shown in Fig. 10 in a vertically set state represented by a dotted arrow can be rotated to be in the transversely set state represented by a solid arrow, when the displayed image is flicked to the area 52, the desktop information processing apparatus 100 prints on the sheet in the transversely set state represented by the solid arrow, that is, on the transverse sheet. In this way, the desktop information processing apparatus 100 selects a sheet from the feed section 813 according to the vertically or transversely set state and prints along the display direction of the sheet. In this case, the feed section 813 serves as a constitution at least including a cassette for accommodating a vertically set sheet and a cassette for accommodating a transversely set sheet.

Apart from the aforementioned content, a specific sign (strings or a mark representing the confidential information of a company or a content forbidden to be printed) may be contained in the displayed image, in this case, the control section 200 carries out no printing operation even if the image is overlapped with the area 52 affixed with a 'Print' label. At this time, the control section 200 analyzes the content of the displayed image using an OCR technology or an image matching technology and carries out no control operation if a predefined sign is contained in the displayed image. Further, the control section 200 may determine whether or not to carry out a printing or deletion operation by comparing the user ID of the user currently using the desktop information processing apparatus 100 with information of the owner of the image.

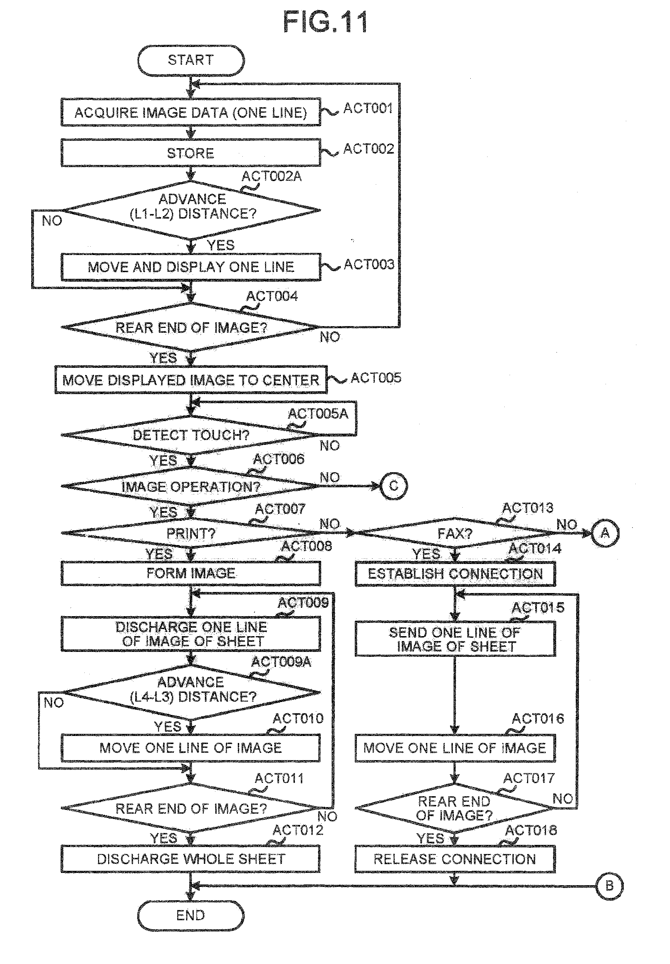

Fig. 11-Fig. 13 are flowcharts exemplifying the operations of the desktop information processing apparatus 100. First, an operation of acquiring an image is described with reference to Fig. 11, and additionally, the example of the operations shown in Fig. 11 is an example of the acquisition of an original sheet by the scanning section 84.

The control section 200 acquires the one line of image data acquired by the scanning section 84 (ACT 001) and stores the one line of image in the DRAM 20 (ACT 002). The control section 200 determines whether or not the original sheet advances a (L1-L2) distance (ACT 002A) and carries out ACT 003 if the original sheet advances a (L1-L2) distance (Yes in ACT 002A) or ACT 004 if the original sheet fails to advance a (L1-L2) distance (No in ACT 002A) . The advancement distance of the sheet can be detected by a set sensor or calculated according to a conveyance speed (constant) and a time. The control section 200 controls the touch panel display 50 so as to make the one line of image stored in the DRAM 20 advance and display from the end part 501 of the touch panel display 50 to the center of the touch panel display 50 (ACT 003) . The control section 200 carries out a display control with the one line of image displaying again and with the displayed image moving towards the advancement direction. The control section 200 determines whether or not the line acquired is the rear end of the image (ACT 004). The control section 200 carries out ACT 001-003 repeatedly until the acquired line is the rear end of the image (Loop of No in ACT 004), thereby synchronizing the reading speed of the scanning section 84 (the advancement speed of the sheet in the insertion section 81) with the display speed. Further, by changing the acquisition device to the network I/F 60 and setting the end part 501 as the end part where the area 54 exists, the operation becomes a FAX receiving operation. In the case of receiving a mail or receiving data from the white board, receiving image data line by line is sometimes difficult, thus, in this case, all image data is received first, and then the image data is displayed line by line.

When the rear end of the displayed image is acquired (Yes in ACT 004), the control section 200 controls the touch panel display 50 so as to the displayed image is move to the center of the screen (ACT 005).

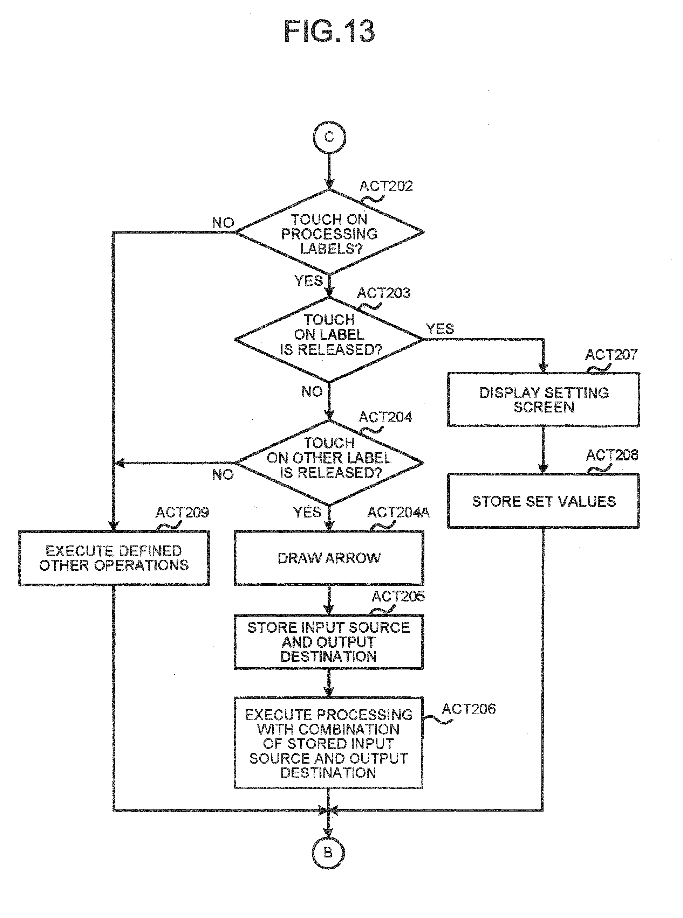

The control section 200 determines whether or not a fingertip or pen point touches the touch panel display 50 (ACT 005A). The control section 200 stands by until a fingertip or pen point touches the touch panel display 50 (Loop of No in ACT 005A) . If there is a touch (Yes in ACT 005A), the control section 200 determines whether or not the touch is a flick operation on the displayed image (ACT 006). The operation is moved to the operation shown in Fig. 13 if the touch is not a flick operation on the displayed image (No in ACT 006),

If the touch is a flick operation on the image (Yes in ACT 006), the following operation is carried out according to the destination of the flick is which one of the areas 51-56.

If the destination of the flick is the area 51 affixed with a 'Print' label (Yes in ACT 007), the image processing section 80 forms an image on the sheet according to an instruction from the control section 200 (ACT 008). The conveyance path R3 to which the sheet formed with the image from the image processing section 80 is discharged according to an instruction from the control section 200 and via which the sheet is conveyed to the discharging section 82. In the meanwhile, the control section 200 carries out a display control in such a manner that the front head end of the displayed image touches with the end part 502 of the touch panel display 50.

The control section 200 controls the conveyance path R3 to output one line of the displayed image from the discharging section 82 (ACT009) . The control section 200 determines whether or not the sheet advances a (L4-L3) distance (ACT 009A), carries out ACT 010 if the sheet advances a (L4-L3) distance (Yes in ACT 009A) or ACT 011 If the sheet fails to advance a (L4-L3) distance (No in ACT 009A) . The advancement distance of the sheet may be detected by a set sensor or calculated according to a conveyance speed (constant) and a time. The control section 200 moves one line of the image displayed on the touch panel display 50 to the end part 502 (ACT 010) . The control section 200 carries out ACT 009, ACT009A and ACT 010 repeatedly until the rear end of the displayed image reaches the end part 502 of the touch panel display 50 (Loop of No in ACT 011). When the rear end of the displayed image reaches the end part 502 of the touch panel display 50 (Yes in ACT 011), the control section 200 carries out a control to discharge the whole sheet if there is a residual sheet (ACT 012), and then the operation is ended.

If the destination of the flick is the area 54 affixed with a 'FAX' label (Yes in ACT 013), the control section 200 activates the network I/F 60 to establish the connection with a sending destination (ACT 014). In the meanwhile, the control section 200 acquires the FAX number of the sending destination by displaying a dialog, thereby establishing the connection. The control section 200 activates the network I/F 60 to send one line of image (ACT 015) and moves the one line of the displayed image towards an end part of the touch panel display 50 (ACT 016). The faxing is synchronized with the displayed image by carrying out ACT 015 and ACT 016 repeatedly until the rear end of the displayed image reaches the end part of the touch panel display 50 (Loop of No in ACT 017). When the rear end of the displayed image reaches the end part of the touch panel display 50 (Yes in ACT 017), the control section 200 releases the connection (ACT 018) and ends the flow.

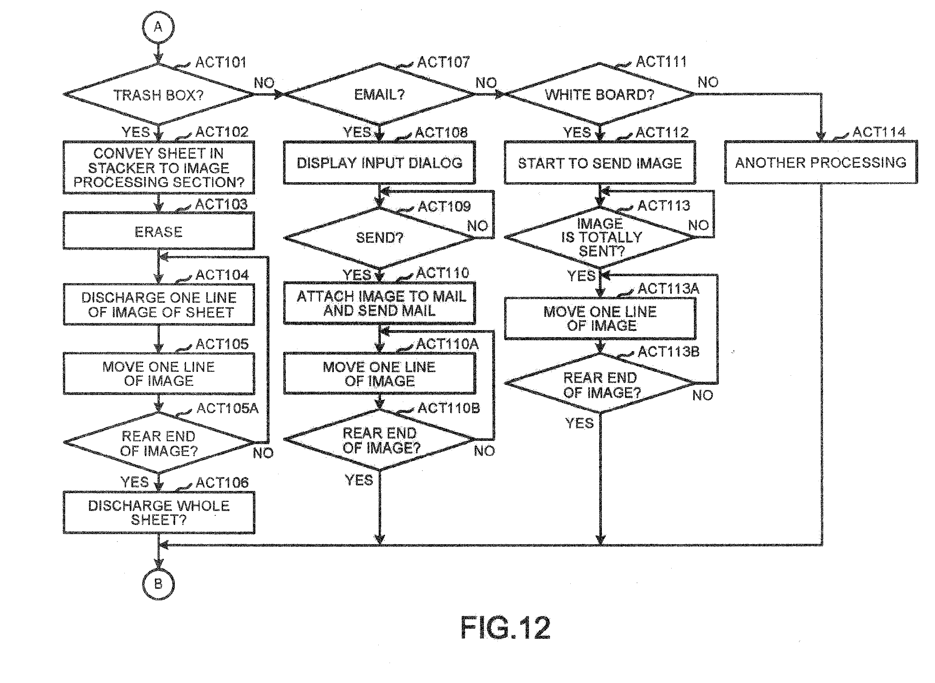

Next, the operations carried out when the destination of the flick is the area 56 affixed with a 'Trash box' label (Yes in ACT 101) is described with reference to Fig. 12. The control section 200 controls the conveyance path R2 so as to the original sheet accommodated in the collection stacker 83 is conveyed to the image processing section 80 (ACT 102). The control section 200 controls the image processing section 80 to erase the image formed on the conveyed original sheet (ACT 103). The conveyance path R3 acquires the image-erased sheet according to an instruction from the control section 200 and conveys the sheet to the discharging section 82. In the meanwhile, the control section 200 moves the front head end of the image displayed on the touch panel display 50 to the end part of the screen.

The control section 200 controls the conveyance path R3 to output one line of the displayed image from the discharging section 82 (ACT 104) while moving one line of the displayed image on the touch panel display 50 towards the end part (ACT 105). The control section 200 carries out ACT 104 and ACT 105 repeatedly until the rear end of the displayed image reaches the end part of the display area of the touch panel display 50 (Loop of No in ACT 105A). When the rear end of the displayed image reaches the end part of the display area of the touch panel display 50 (Yes in ACT 105A), the control section carries out a control to discharge the whole sheet if there is a residual sheet(ACT 016) then ends the flow.

Besides, if the displayed image is not an image obtained from the scanning section 84, instead of carrying out a color erasing processing, only the data of the displayed image is deleted, as stated above.

If the destination of the flick is the area 55 affixed with an 'Email' label (Yes in ACT 107), the control section 200 displays a dialog for the input of the title, the text body and the sending destination of a mail (ACT 108) . The control section 200 stands by until each of the aforementioned items is input and a 'send' button is pressed (Loop of No in ACT 109). When the 'send' button is pressed (Yes in ACT 109), the control section 200 attaches the displayed image in the mail and activates the network I/F 60 to send the mail (ACT 110). At this time, the control section 200 moves the image line by line so as to the displayed image is acquired into the end part of the touch panel display 50 (ACT 110A). The control section 200 carries out the display control until the rear end of the displayed image reaches the end part of the touch panel display 50 (Loop of No in ACT 110B). The flow is ended when the rear end of the displayed image reaches the end part of the touch panel display 50 (Yes in ACT 110B).

If the destination of the flick is the area 53 affixed with a 'White board' label (Yes in ACT 111), the control section 200 starts to send an image to an electronic white board (ACT 112) . When the image is totally sent (Yes in ACT 113), the control section 200 moves the image line by line so as to the displayed image is acquired into the end part of the touch panel display 50 (ACT 113A). The control section 200 carries out the display control until the rear end of the image reaches the end part of the touch panel display 50 (Loop of No in ACT 113B) . The flow is ended when the rear end of the displayed image reaches the end part of the touch panel display 50 (Yes in ACT 113B).

If the destination of the flick is not any of the areas 51-56 (No in ACT 111), another corresponding processing is carried out (ACT 114).

Next, the operations carried out when the result in ACT 006 is taken as 'No' are described with reference to Fig. 13. If the operation is not a flick operation on the image in ACT 006 (No in ACT 006), the control section 200 determines whether or not the operation is a touch on the areas 51-56 (hereinafter referred to as processing labels) (ACT 202). If the operation is not a touch on the processing labels (No in ACT 202), the control section 200 carries out another operation (ACT 209), which may be, for example, the image rotation operation shown in Fig. 10 or the release operation indicated by the arrow AR shown in Fig. 8 or Fig. 9 or the like.

If the operation is a touch on the processing labels (Yes in ACT 202), the control section 200 sequentially detects the position where the touch is released (the position where a fingertip or pen point leaves) . If the position where the touch is released is a touched processing label (Yes in ACT 203), the control section 200 controls the touch panel display 50 to display a setting screen for setting the function (ACT 207) and stores the set values acquired in the HDD 40 (ACT 208). For example, if a touch detection and a release operation are carried out in the area 52 affixed with a 'Print' label, a printing setting dialog is displayed on which the control section 200 acquires set values including 'number of print copies' and 'monochrome/color' as usual. Additionally, the set values are stored as default values. In the case where the position where the touch is released is the area affixed with an 'Email' label or a 'Fax' label, the control section 200 displays a dialog for the input of a defaulted sending destination; in the case of a white board, a dialog is displayed to input the identification information of a white board which indicates a sending destination. In the case where the position where the touch is released is the area affixed with a 'Trash box' label, the control section 200 displays a dialog for the selection of a setting on a data erasing method (logical erasing or physical erasing) and a determination on whether or not a color erasing processing is carried out in the image processing section 80.

If the position where the touch is released is the other processing labels (No in ACT 203 and Yes in ACT 204), the operation becomes a function combination operation illustrated in Fig. 8. That is, the control section 200 controls the display of the touch panel display 50 by connecting a touched processing label with a touch-released processing label with an arrow (ACT 204A) and stores the combination of the functions of an input source and an output destination in the HDD 40 (ACT 205). Hereinafter, the control section 200 carries out a control to output the data from the designated input source to the designated output destination. This operation is realized by replacing ACT 006 of the flow shown in Fig. 11 or Fig. 12 with following operation. That is, an operation of selecting an output destination based on the correspondence relationship registered in the HDD 40 as well as the information on the correspondence relationship is input according to which one of the functions.

ACT 209 is carried out if the result in ACT 204 is taken as No.

The functions for realizing the present invention are prerecorded in an apparatus in embodiments described herein, however, the present invention is not limited to this, the same functions may also be downloaded to the apparatus from a network or stored in a recording medium such as a CD-ROM and then installed in the apparatus. Not limited to CD-ROM, the recording medium may be of any form as long as the recording medium is capable of storing programs and is readable to the apparatus. Further, the function achieved by an installed or downloaded program can also be achieved by the cooperation with an OS (Operating System) in the apparatus.

According to embodiments described herein, by arranging an image processing section in a desktop information processing apparatus, the operation of the user is closely related to input/output functions for the image processing, and the operability related to the image processing is improved.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope of the invention.

## Claims

1. A desktop information processing apparatus, comprising:
a touch panel display having a display surface on the upper surface of the top plate of the desktop information processing apparatus;
an insertion section for the insertion of an original sheet;
a scanning section configured to read surface of the sheet inserted from the insertion section;
an image processing section configured to carry out an image processing for the sheet;
a discharging section configured to discharge the sheet processed by the image processing section; and
a control section configured to control the operation or display on the touch panel display and the operations of the image processing section based on the operation.

2. The desktop information processing apparatus according to claim 1, wherein the image processing section is configured to form the image obtained by the scanning section from one side of the sheet on another sheet.

3. The desktop information processing apparatus according to claim 1 or 2, wherein the image processing section is configured to delete the image formed on one side of the sheet inserted from the insertion section.

4. The desktop information processing apparatus according to any one of claims 1 to 3, wherein:
the insertion section is arranged in such a manner that the longitudinal direction thereof is parallel to a first end part of the touch panel display and is opened on the upper surface of the top plate; and
the touch panel display is configured to output the image read by the scanning section from the first end part and to display the image with the image advancing towards the center of the touch panel display, wherein the advancement speed of the image is the same as that of the original sheet inserted into the insertion section.

5. The desktop information processing apparatus according to any one of claims 1 to 4, wherein:
the discharging section is arranged in such a manner that the longitudinal direction thereof is parallel to a second end part of the touch panel display and is opened on the upper surface of the top plate; and
the touch panel display is configured to display the displayed image with the displayed image advancing and feeding from the center of the touch panel display to the second end part, wherein the feed speed is the same as the discharging speed of the sheet discharged from the discharging section.

6. The desktop information processing apparatus according to any one of claims 3 to 5, wherein:
the touch panel display is configured to display the image of the original sheet read by the scanning section in such a manner that the image can be moved according to an operation on the touch panel; and
if the image displayed on the touch panel display is moved to be overlapped with a predefined area displayed on the touch panel display, the image processing section is configured to delete the image formed on the surface of the original sheet.

7. The desktop information processing apparatus according to any one of claims 1 to 6, wherein:
the touch panel display is configured to display a mark representing a data input/output function thereon and displays the image in such a manner that the image can be moved according to an operation on the touch panel display; and
the control section is configured to carry out a control to output the image using a function corresponding to the mark when the image is overlapped with the mark.

8. The desktop information processing apparatus according to claim 7, wherein:
the touch panel display is configured to display a plurality of marks representing different functions; and
when detecting an operation of associating a first mark serving as one mark of the plurality of marks with a second mark serving as another mark, the control section is configured to carry out a control to output the data input using the function corresponding to the first mark using a function corresponding to the second mark.

9. The desktop information processing apparatus according to claim 7 or 8, wherein
after a touch on the mark is detected and the touch on the same mark is released, the touch panel display is configured to display a setting screen for the setting of a function corresponding to the mark.

10. A display method of a desktop information processing apparatus comprising a sheet insertion section, a scanning section, an image processing section, a sheet discharging section and a touch panel display, wherein the insertion section, the discharging section and the display surface of the touch panel display are located on the upper surface of the top plate of the desktop information processing apparatus, and the method comprising:
reading the surface of a sheet inserted into the insertion section using the scanning section;
displaying the read image on the touch panel display with the read image outputting from the end part of the touch panel display closest to the insertion section and moving the read image to the center of the touch panel display at a speed the same as the advancement speed of the original sheet inserted into the insertion section; and
displaying the image on the touch panel display with the image advancing and feeding from the center of the touch panel display into the end part of the touch panel display closest to the discharging section at a feed speed the same as the discharging speed of the sheet discharged from the discharging section.

11. The display method according to claim 10, further comprising :
forming the image obtained by the scanning section from one side of the sheet on another sheet.

12. The display method according to claim 10 or 11, further comprising:
deleting the image formed on one side of the sheet inserted from the insertion section.

13. The display method according to claim 12, further comprising:
displaying the image of the original sheet read by the scanning section in such a manner that the image can be moved according to an operation on the touch panel; and
deleting the image formed on the surface of the original sheet if the image displayed on the touch panel display is moved to be overlapped with a predefined area displayed on the touch panel display,.

14. The display method according to any one of claims 10 to 13, further comprising:
displaying a mark representing a data input/output function thereon and displays the image in such a manner that the image can be moved according to an operation on the touch panel display; and
carrying out a control to output the image using a function corresponding to the mark when the image is overlapped with the mark.

15. The display method according to claim 14, further comprising:
displaying a plurality of marks representing different functions; and
carrying out a control to output the data input using the function corresponding to the first mark using a function corresponding to the second mark when detecting an operation of associating a first mark serving as one mark of the plurality of marks with a second mark serving as another mark.
